# EUROPÄISCHE PATENTSCHRIFT

(11) **EP 1 743 003 B1**
(45) Veröffentlichungstag und Bekanntmachung des Hinweises auf die Patenterteilung: **22.04.2009**
(21) Anmeldenummer: 05741353.6
(22) Anmeldetag: 03.05.2005
(51) Int. Cl.: C09D 5/26, C09D 7/12

(54) **THERMISCH HOCHBELASTBARER GLASKERAMIK- ODER GLASKÖRPER DEKORIERT MIT EINER METALLIKFARBE**
GLASS CERAMIC OR GLASS ELEMENT THAT CAN BE SUBJECTED TO GREAT THERMAL LOADS AND IS DECORATED WITH A METALLIC COLOR
CORPS EN VITROCERAMIQUE OU EN VERRE A HAUTE CHARGE THERMIQUE ADMISSIBLE DECORE AVEC UNE PEINTURE METALLIQUE

(30) Priorität: 06.05.2004 DE 102004022258
(43) Veröffentlichungstag der Anmeldung: 17.01.2007
(73) Patentinhaber: Schott AG, 55122 Mainz (DE)
(72) Erfinder: COTLEAR DE WITZMANN, Monica, 55268 Nieder-Olm (DE); WENNEMANN, Dietmar, 55234 Albig (DE); MILANOVSKA, Angelina, 55120 Mainz (DE); RUHL, Ella, 55120 Mainz (DE); LAUTERBACH, Eva, 55444 Seibersbach (DE); KOSMAS, Loannis, 55271 Stadecken-Elsheim (DE)
(74) Vertreter: Fuchs
(86) Internationale Anmeldenummer: PCT/EP2005/004776
(87) Internationale Veröffentlichungsnummer: WO 2005/108509

(56) Entgegenhaltungen:
- EP-A- 0 601 346
- DE-A1- 10 243 500
- DE-A1- 10 338 165
- DE-A1- 10 355 160

## Beschreibung

Die Erfindung bezieht sich auf einen thermisch hochbelastbaren Glaskeramik- oder Glaskörper, dekoriert mit einer Metallikfarbe auf der Basis einer silikatischen Schmelze, die mit Effektpigmenten versehen ist.

Derartige Farben auf der Basis einer silikatischen Schmelze sind typischerweise keramische Farben mit einem Glasfluß als Basis. Sie werden bei hohen Temperaturen auf dem Trägerkörper eingebrannt.

Werden als Pigmente sogenannte Effektpigmente, speziell Metalleffekt- oder Perlglanzpigmente verwendet, können entsprechende Metallikfarben hergestellt werden. Ein solches Periglanzpigment auf der Basis beschichteter Glimmerplättcen ist beispielsweise unter der Marke IRIODIN® (Fa. Merck) auf dem Markt.

Glaskeramik- oder Glaskörper, die mit vorgenannten Metallikfarben dekoriert sind, sind insbesondere als Glaskeramikplatten oder Platten aus vorgespanntem Spezialglas mit einem niedrigen thermischen Ausdehnungskoeffizienten, wie Borosilicatglas, die typischerweise als Kochflächen in Kochfeldern eingesetzt werden, d.h. thermisch hochbelastbar sind, ausgebildet. Aber auch beispielsweise Kaminsichtscheiben, Sichtfenster von Backöfen oder Lampenabdeckungen aus diesen Materialien werden im steigenden Maße mit vorgenannten Farben dekoriert.

Da insbesondere Kochflächen von Kochfeldem in modernen Küchen wegen ihrer Großflächigkeit auffällig sind und das stark kundenabhängige Design maßgebend beeinflussen, das auch von Land zu Land verschieden ist, werden in zahlreichen Schriften die unterschiedlichsten Dekorierungen beschrieben. Sie reichen von einfachen Mustern, z.B. als Firmenlogo und Kochzonenmarkierungen bis hin zu komplexen Vollflächen-Dekoren. Neben dem Design kommt es dabei auch insbesondere auf Kratzschutz gegen oberflächige Kratzer und Verminderung der Auffälligkeit gegenüber Verschmutzungen, z.B. Fingerabdrücken und Metallabrieb sowie von Gebrauchsspuren an. Derartige Dekore und ihre Aufbringung auf eine Glaskeramikplatte werden beispielsweise in der DE 44 26 234 C1 (= EP 0 693 464 B1) und der DE 34 33 880 C2 beschrieben. Weitere dekorierte Kochflächen zeigen die DE 197 28 881 C1 (= DE 297 11 916 U1), die DE 100 14 373 C2 und die DE 200 19 210 U1. Die beiden letzteren Schriften beschreiben auch Dekore mit Sol-Gel-basierten Farben, die Metalleffekt-, Perlglanz-, oder Interferenz-Pigmente, d.h. Effektpigmente enthalten, die einen Metallikeffekt in der Farbe bewirken. Aber auch mit derartigen Pigmenten versehene glasflussbasierte, d.h. keramische Metallikfarben sind Stand der Technik.

In bestimmten Marktsegmenten, speziell zur Anpassung an Aluminium- und Edelstahlflächen in modernen Küchen, haben dekorierte Glas-/Glaskeramik-Kochflächen mit einem Metallikeffekt einen hohen Stellenwert. Die bisher verwendeten Effektpigmente konnten jedoch hinsichtlich der Ausprägung des Metallik-Effektes und der Verminderung der Auffälligkeit gegenüber Gebrauchsspuren nicht immer in vollem Umfang befriedigen.

Der Erfindung liegt daher die Aufgabe zugrunde, einen thermisch hochbelastbaren Glaskeramik- oder Glaskörper mit einer Metallikfarbe auf der Basis einer silikatischen Schmelze, die mit Effektpigmenten versehen ist, zu dekorieren, die einen ausgeprägt starken MetallikEffekt aufweist.

Die Lösung dieser Aufgabe gelingt bei einem thermisch hochbelastbaren Glaskeramik- oder Glaskörper, dekoriert mit einer Metallikfarbe auf der Basis einer silikatischen Schmelze, die mit Effektpigmenten versehen ist, gemäß der Erfindung dadurch, daß die Metallikfarbe aus einer silikatischen Schmelze, der Effektpigmente in Form von synthetisch hergestellten Aluminiumoxid (Al₂ O₃)-Plättchen, die mit Metalloxiden beschichtet sind, in einem vorgegebenen Anteil zugesetzt sind, besteht.

Diese Effektpigmente sind zwar an sich bekannt, es lag jedoch nicht nahe, sie in Farben mit einer silikatischen Schmelze als Basis zu verwenden, weil sie nicht branchenüblich sind und ihre Temperaturbeständigkeit gemäß Herstellerangaben nicht ausreichend für den Einsatz in derartigen Farben mit einer silikatischen Schmelze als Basis ist (stabil bis 230° C, gemäß Technical Data Sheet des Herstellers vom Oktober 2002 bzw. Januar 2003). Gemäß Produktinformationen vom Hersteller Merck finden sie daher stets in organischen Matrixen Verwendung, wie z.B. im Automobilbau, in Kunststoffen, in Druckfarben und Lacken. Es war daher nicht ohne weiteres ersichtlich, daß diese Pigmente zum Dekorieren von thermisch hochbelastbaren Glaskeramik- oder Glaskörpern verwendbar wären. Überraschenderweise stellte sich heraus, daß durch das Einschließen der vorgenannten Pigmente in eine silikatische Schmelze, insbesondere einen Glasfluss, wie sie üblicherweise in der Dekoration von Glaskeramiken und Spezialgläsern verwendet werden, die Temperaturstabilität derart erhöht werden kann, daß sie ein völlig neues Anwendungsgebiet erhalten.

Darüber hinaus ergibt sich bei dekorierten Glaskeramik-Kochflächen der Vorteil für die Praxis, daß Metallkratzer, wie sie üblicherweise vom Verschieben von Kochtöpfen auftreten können, unauffällig werden, weil sie durch den ausgeprägten metallischen Effekt dieser Farben überdeckt werden.

Vorzugsweise werden die Effektpigmente der Firma Merck, die unter der Marke Xirallic® im Handel sind, verwendet. Diese Pigmente ermöglichen einen stärkeren Metallikeffekt als bei allen anderen bekannten Effektpigmenten. Sie bewirken einen stärkeren Glanz und eine intensivere Farbstärke. Die Korngröße liegt bei enger Korngrößenverteilung im Bereich von
10 - 30 µm.
Je nach gewünschtem Farbton stehen verschiedene Pigmente zur Auswahl, wie z.B.
a) für die Farbe: Kupfer
   Xirallic® F 60 - 50 SW
   Fireside Copper
b) für die Farbe: Gold
   Xirallic® T 60 - 20 SW
   Sunbeam Gold
c) für die Farbe: Silber-Weiß
   Xirallic® T 60 -10 SW
   Crystal Silver
d) für die Farbe: Rot
   Xirallic® F 60 - 51 SW
   Radiant Red

Weitere mögliche Pigmente sind in Unteransprüchen gekennzeichnet.

Vorzugsweise ist die Basis der Farbe mit den erfindungsgemäßen Effektpigmenten ein Glasfluss.

Vorzugsweise besitzt der Glasfluß eine Glaszusammensetzung (in Gew.-%) von:

| | |
|---|---|
| Li₂O | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3 |

Diese Glaszusammensetzung des Glasflusses - im folgenden "GF1" genannt - entspricht derjenigen nach der DE 197 21 737 C1, deren Offenbarungsinhalt durch Bezugnahme mit zum Offenbarungsumfang der vorliegenden Anmeldung gemacht wird.
Andere, je nach Anwendung einsetzbare Glaszusammensetzungen von Glasflüssen werden in DE 198 34 801 C2, FR 2 732 960,
EP 1 119 524 B1, DE 42 01 286 A1 und EP 0 460 863 B1 beschrieben.

Neben den erfindungsgemäß dem Glasfluss zugesetzten Effektpigmenten können optional auch übliche Füllstoffe und/oder andere konventionelle Farbpigmente, beispielsweise Farbkörper (Spinelle) zugesetzt werden.

Die Dekoration erfolgt vorzugsweise durch Siebdruck, insbesondere im Fall von Glas-/Glaskeramik-Kochflächen. Dabei waren besondere Schwierigkeiten in der Fertigungstechnik zu überwinden. Insbesondere bereitete die Anpastung/das Einstellen der richtigen Viskosität sowie die Korngröße der Pigmente für die Siebdruckanwendung besondere Probleme. Der Stand der Technik konnte hierzu keine Hinweise liefern, da die in Frage kommenden Effektpigmente, gelöst in organischen Lösungsmitteln, typischerweise bei ihrem Auftrag gesprüht werden, wie es insbesondere bei Autolacken der Fall ist.

Die Dicke der erfindungsgemäßen Dekorierung liegt typischerweise im Bereich von 1,0 - 6 µm.

### Ausführungsbeispiele:

1. Glasfluss "GF1" (nach DE 197 21 737 C) + 20 %
   Effektpigmente Xirallic® T 60 - 20 SW Sunbeam Gold, high chroma crystal sparkle pigment, angepastet mit
   Siebdruckmedium, bedruckt auf Gläsern/Glaskeramiken, die unter nachstehenden Markenprodukten bekannt geworden sind:
   Darüber hinaus ergibt sich bei dekorierten Glaskeramik-Kochflächen der Vorteil für die Praxis, daß Metallkratzer, wie sie üblicherweise vom Verschieben von Kochtöpfen auftreten können, unauffällig werden, weil sie durch den ausgeprägten metallischen Effekt dieser Farben überdeckt werden.

Vorzugsweise werden die Effektpigmente der Firma Merck, die unter der Marke Xirallic® im Handel sind, verwendet. Diese Pigmente ermöglichen einen stärkeren Metallikeffekt als bei allen anderen bekannten Effektpigmenten. Sie bewirken einen stärkeren Glanz und eine intensivere Farbstärke. Die Korngröße liegt bei enger Korngrößenverteilung im Bereich von
10 - 30 µm.
Je nach gewünschtem Farbton stehen verschiedene Pigmente zur Auswahl, wie z.B.
a) für die Farbe: Kupfer
   Xirallic® F 60 - 50 SW
   Fireside Copper
b) für die Farbe: Gold
   Xirallic® T 60 - 20 SW
   Sunbeam Gold
c) für die Farbe: Silber-Weiß
   Xirallic® T 60 - 10 SW
   Crystal Silver
d) für die Farbe: Rot
   Xirallic® F 60 - 51 SW
   Radiant Red

Weitere mögliche Pigmente sind in Unteransprüchen gekennzeichnet.

Vorzugsweise ist die Basis der Farbe mit den erfindungsgemäßen Effektpigmenten ein Glasfluss.

Vorzugsweise besitzt der Glasfluß eine Glaszusammensetzung (in Gew.-%) von:

| | |
|---|---|
| Li₂O | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3 |

Diese Glaszusammensetzung des Glasflusses - im folgenden "GF1" genannt - entspricht derjenigen nach der DE 197 21 737 C1, deren Offenbarungsinhalt durch Bezugnahme mit zum Offenbarungsumfang der vorliegenden Anmeldung gemacht wird.
Andere, je nach Anwendung einsetzbare Glaszusammensetzungen von Glasflüssen werden in DE 198 34 801 C2, FR 2 732 960,
EP 1 119 524 B1, DE 42 01 286 A1 und EP 0 460 863 B1 beschrieben.

Neben den erfindungsgemäß dem Glasfluss zugesetzten Effektpigmenten können optional auch übliche Füllstoffe und/oder andere konventionelle Farbpigmente, beispielsweise Farbkörper (Spinelle) zugesetzt werden.

Die Dekoration erfolgt vorzugsweise durch Siebdruck, insbesondere im Fall von Glas-/Glaskeramik-Kochflächen. Dabei waren besondere Schwierigkeiten in der Fertigungstechnik zu überwinden. Insbesondere bereitete die Anpastung/das Einstellen der richtigen Viskosität sowie die Korngröße der Pigmente für die Siebdruckanwendung besondere Probleme. Der Stand der Technik konnte hierzu keine Hinweise liefern, da die in Frage kommenden Effektpigmente, gelöst in organischen Lösungsmitteln, typischerweise bei ihrem Auftrag gesprüht werden, wie es insbesondere bei Autolacken der Fall ist.

Die Dicke der erfindungsgemäßen Dekorierung liegt typischerweise im Bereich von 1,0 - 6 µm.

### Ausführungsbeispiele:

1. Glasfluss "GF1" (nach DE 197 21 737 C) + 20 %
   Effektpigmente Xirallic® T 60 - 20 SW Sunbeam Gold, high chroma crystal sparkle pigment, angepastet mit
   Siebdruckmedium, bedruckt auf Gläsern/Glaskeramiken, die unter nachstehenden Markenprodukten bekannt geworden
   sind:
   a) CERAN HIGHTRANS ® Kochflächen
   b) CERAN SUPREMA ® Kochflächen
   c) ROBAX ® Kaminsichtscheiben
   d) CERAN ARCTIC FIRE ® Kochflächen
   e) CERADUR ® Kochflächen
   ergibt jeweils eine intensive Messing-Farbe mit verschiedenen
   Farbnuancen gelblich-rötlich, je nach Hintergrundfarbe des Trägers, und zwar auf:
   - CERAN HIGHTRANS ® und CERAN SUPREMA ® eine intensive Messingfarbe mit gelblich-rötlichen Farbnuancen,
   - transparenter Glaskeramik (z.B. ROBAX ®) eine transparente Mattierung mit blickwinkelabhängigem "Messing-Stich",
   - weißer transluzenter (z.B. ARCTIC FIRE) und opaker (z.B. CERADUR) Glaskeramik die Farbanmutung "seidenweiß" mit blickwinkelabhängigem "Messing-Stich".
2. Glasfluss "GF1" + 20 % Effektpigmente XirallicC® F 60 - 51 SW Radiant Red high chroma crystal sparkle pigment, angepastet mit Siebdruckmedium, bedruckt auf den gleichen Substraten wie im ersten Beispiel.
   Das ergibt jeweils eine intensive metallische Kupferfarbe mit verschiedenen Farbintensitäten, je nach Hintergrundfarbe des Trägers, und zwar auf:
   - CERAN HIGHTRANS ®) und CERAN SUPREMA® eine intensive Kupferfarbe mit rötlichen Farbnuancen,
   - transparenter Glaskeramik (z.B. ROBAX ®) eine transparente Mattierung mit blickwinkelabhängigem "Kupferstich",
   - weißer transluzenter (z.B. ARCTIC FIRE) und opaker (z.B. CERADUR) Glaskeramik die Farbanmutung "seidenweiß" mit blickwinkelabhängigem "Kupferstich".

## Patentansprüche

1. Thermisch hochbelastbarer Glaskeramik- oder Glaskörper, dekoriert mit einer Metallikfarbe auf der Basis einer silikatischen Schmelze, die mit Effektpigmenten versehen ist, **dadurch gekennzeichnet, daß** die Metallikfarbe aus einer silikatischen Schmelze, der Effektpigmente in Form von synthetisch hergestellten Aluminiumoxid (Al₂O₃)-Plättchen, die mit Metalloxiden beschichtet sind, in einem vorgegebenen Anteil zugesetzt sind, besteht.

2. Glaskeramik- oder Glaskörper nach Anspruch 1, **dadurch gekennzeichnet, daß** die Effektpigmente durch Effektpigmente der Firma Merck, die unter der Marke Xirallic® high chroma sparkle pigments im Handel sind, gebildet sind.

3. Glaskeramik- oder Glaskörper nach Anspruch 2, **dadurch gekennzeichnet, daß** das Effektpigment ein TiO₂ /Al₂ 0₃ - Pigment mit der Handelsbezeichnung Xirallic® T 60 - 10 SW Crystal Silver ist.

4. Glaskeramik- oder Glaskörper nach Anspruch 2, **dadurch gekennzeichnet, daß** das Effektpigment ein Fe₂ O₃ /Al₂ O₃ -Pigment mit der Handelsbezeichnung Xirallic® F 60 - 50 SW Fireside Copper ist.

5. Glaskeramik- oder Glaskörper nach Anspruch 2, **dadurch gekennzeichnet, daß** das Effektpigment ein TiO₂/Al₂0₃-Interferenz-Pigment mit der Handelsbezeichnung Xirallic® T 60 - 20 SW Sunbeam Gold ist.

6. Glaskeramik- oder Glaskörper nach Anspruch 2, **dadurch gekennzeichnet, daß** das Effektpigment ein Fe₂O₃/Al₂O₃-Pigment mit der Handelsbezeichnung Xirallic® F 60 - 51 SW Radiant Red ist.

7. Glaskeramik- oder Glaskörper nach Anspruch 2, **dadurch gekennzeichnet, daß** das Effektpigment ein TiO₂/Al₂0₃-Interferenzpigment mit der Handelsbezeichnung Xirallic® T 60 - 21 SW Solaris Red ist.

8. Glaskeramik- oder Glaskörper nach Anspruch 2, **dadurch gekennzeichnet, daß** das Effektpigment ein TiO₂/Al₂0₃-Interferenzpigment mit der Handelsbezeichnung Xirallie® T 60 - 23 SW Galaxy Blue ist.

9. Glaskeramik- oder Glaskörper nach Anspruch 2, **dadurch gekennzeichnet, daß** das Effektpigment ein TiO₂/Al₂0₃-Interferenzpigment mit der Handelsbezeichnung Xirallie® T 60 - 24 SW Stellar Green ist.

10. Glaskeramik- oder Glaskörper nach einem der Ansprüche 1 bis 9, **dadurch gekennzeichnet, daß** der Glasfluß eine Glaszusammensetzung (in Gewicht-%) von
| | |
|---|---|
| Li₂O | 0 - 5 |
| Na₂O | 0 - 5 |
| K₂O | < 2 |
| ΣLi₂0 + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3 |
aufweist.

11. Glaskeramik- oder Glaskörper nach einem der Ansprüche 1 bis 10, **dadurch gekennzeichnet, daß** der Metallikfarbe übliche Füllstoffe oder andere konventionelle Farbpigmente zugesetzt sind.

12. Glaskeramik- oder Glaskörper nach einem der Ansprüche 1 bis 11, **dadurch gekennzeichnet, daß** die Dekorierung durch Siebdruck gebildet ist.

13. Glaskeramik-. oder Glaskörper nach einem der Ansprüche 1 bis 12, **dadurch gekennzeichnet, daß** der Pigmentanteil im Bereich von 1 bis 30 Gew.-% liegt.

14. Glaskeramik- oder Glaskörper nach einem der Ansprüche 1 bis 13, ausgebildet als Kochfläche eines Kochfeldes mit der Dekorierung auf der Kochflächen-Oberseite.

## Claims

1. Glass ceramic or glass element that can be subjected to high thermal loads and is decorated with a metallic colorant based on a silicate melt provided with effect pigments, **characterized in that** the metallic colorant consists of a silicate melt admixed with a predetermined proportion of effect pigments in the form of synthetically produced aluminium oxide (Al₂O₃) platelets coated with metal oxides.

2. Glass ceramic or glass element according to Claim 1, **characterized in that** the effect pigments are formed by effect pigments commercially available from Merck as Xirallic® high chroma sparkle pigments.

3. Glass ceramic or glass element according to Claim 2, **characterized in that** the effect pigment is a TiO₂/Al₂O₃ pigment bearing the trade name Xirallic® T 60-10 SW Crystal Silver.

4. Glass ceramic or glass element according to Claim 2, **characterized in that** the effect pigment is an Fe₂O₃/Al₂O₃ pigment bearing the trade name Xirallic® F 60-50 SW Fireside Copper.

5. Glass ceramic or glass element according to Claim 2, **characterized in that** the effect pigment is a TiO₂/Al₂O₃ interference pigment bearing the trade name Xirallic® T 60-20 SW Sunbeam Gold.

6. Glass ceramic or glass element according to Claim 2, **characterized in that** the effect pigment is an Fe₂O₃/Al₂O₃ pigment bearing the trade name Xirallic® F 60-51 SW Radiant Red.

7. Glass ceramic or glass element according to Claim 2, **characterized in that** the effect pigment is a TiO₂/Al₂O₃ interference pigment bearing the trade name Xirallic® T 60-21 SW Solaris Red.

8. Glass ceramic or glass element according to Claim 2, **characterized in that** the effect pigment is a TiO₂/Al₂O₃ interference pigment bearing the trade name Xirallic® T 60-23 SW Galaxy Blue.

9. Glass ceramic or glass element according to Claim 2, **characterized in that** the effect pigment is a TiO₂/Al₂O₃ interference pigment bearing the trade name Xirallic® T 60-24 SW Stellar Green.

10. Glass ceramic or glass element according to any one of Claims 1 to 9, **characterized in that** the glass flux has a glass composition (in % by weight) of
| | |
|---|---|
| Li₂O | 0-5 |
| Na₂O | 0-5 |
| K₂O | < 2 |
| ΣLi₂O + Na₂O + K₂O | 1-10 |
| MgO | 0-3 |
| CaO | 0-4 |
| SrO | 0-4 |
| BaO | 0-4 |
| ZnO | 0-4 |
| B₂O₃ | 15-27 |
| Al₂O₃ | 10-20 |
| SiO₂ | 43-58 |
| TiO₂ | 0-3 |
| ZrO₂ | 0-4 |
| Sb₂O₃ | 0-2 |
| F | 0-3. |

11. Glass ceramic or glass element according to any one of Claims 1 to 10, **characterized in that** the metallic colorant additionally includes customary fillers or other conventional colour pigments.

12. Glass ceramic or glass element according to any one of Claims 1 to 11, **characterized in that** the decoration is formed by screen printing.

13. Glass ceramic or glass element according to any one of Claims 1 to 12, **characterized in that** the pigment content is in the range from 1% to 30% by weight.

14. Glass ceramic or glass element according to any one of Claims 1 to 13, configured as cooking surface of a hob with the decoration on the topside of the cooking surface.

## Revendications

1. Corps en verre ou vitrocéramique apte à supporter de fortes contraintes thermiques, décoré avec une peinture métallisée à base d'une masse fondue de type silicate, qui est munie de pigments à effet, **caractérisé en ce que** la peinture métallisée consiste en une masse fondue de type silicate à laquelle sont ajoutés en une proportion préétablie des pigments à effet sous forme de paillettes d'oxydes d'aluminium (Al₂O₃), qui sont enrobées avec des oxydes métalliques, produites par synthèse.

2. Corps en verre ou vitrocéramique selon la revendication 1, **caractérisé en ce que** les pigments à effet sont constitués de pigments à effet de la société Merck, qui se trouvent dans le commerce sous la marque Xirallic® high chroma sparkle pigments.

3. Corps en verre ou vitrocéramique selon la revendication 2, **caractérisé en ce que** le pigment à effet est un pigment TiO₂/Al₂O₃ portant la dénomination commerciale Xirallic® T 60 - 10 SW Crystal Silver.

4. Corps en verre ou vitrocéramique selon la revendication 2, **caractérisé en ce que** le pigment à effet est un pigment Fe₂O₃/Al₂O₃ portant la dénomination commerciale Xirallic® F 60 - 50 SW Fireside Copper.

5. Corps en verre ou vitrocéramique selon la revendication 2, **caractérisé en ce que** le pigment à effet est un pigment TiO₂/Al₂O₃ portant la dénomination commerciale Xirallic® T 60 - 20 SW Sunbeam Gold.

6. Corps en verre ou vitrocéramique selon la revendication 2, **caractérisé en ce que** le pigment à effet est un pigment Fe₂O₃/Al₂O₃ portant la dénomination commerciale Xirallic® F 60 - 51 SW Radiant Red.

7. Corps en verre ou vitrocéramique selon la revendication 2, **caractérisé en ce que** le pigment à effet est un pigment interférentiel TiO₂/Al₂O₃ portant la dénomination commerciale Xirallic® T 60 - 21 SW Solaris Red.

8. Corps en verre ou vitrocéramique selon la revendication 2, **caractérisé en ce que** le pigment à effet est un pigment interférentiel TiO₂/Al₂O₃ portant la dénomination commerciale Xirallic® T 60 - 23 SW Galaxy Blue.

9. Corps en verre ou vitrocéramique selon la revendication 2, **caractérisé en ce que** le pigment à effet est un pigment interférentiel TiO₂/Al₂O₃ portant la dénomination commerciale Xirallic® T 60 - 24 SW Stellar Green.

10. Corps en verre ou vitrocéramique selon l'une quelconque des revendications 1 à 9, **caractérisé en ce que** le fondant de vitrification présente la composition (en % en poids) suivante
| | |
|---|---|
| Li₂O | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO2 | 0 - 4 |
| Sb₂O₃ | 0 - 2 |
| F | 0 - 3. |

11. Corps en verre ou vitrocéramique selon l'une quelconque des revendications 1 à 10, **caractérisé en ce qu'**on ajoute à la peinture métallisée des charges usuelles ou d'autre pigments colorés traditionnels.

12. Corps en verre ou vitrocéramique selon l'une quelconque des revendications 1 à 11, **caractérisé en ce que** le décor est formé par sérigraphie.

13. Corps en verre ou vitrocéramique selon l'une quelconque des revendications 1 à 12, **caractérisé en ce que** la proportion de pigment se situe dans la plage allant de 1 à 30 % en poids.

14. Corps en verre ou vitrocéramique selon l'une quelconque des revendications 1 à 13, constitué en tant que surface de cuisson d'une plaque de cuisson avec le décor sur la face supérieure de la surface de cuisson.
